# FASCICULE DE BREVET EUROPEEN

(11) **EP 2 736 749 B1**
(45) Date de publication et mention de la délivrance du brevet: **09.09.2015**
(21) Numéro de dépôt: 12733792.1
(22) Date de dépôt: 18.06.2012
(51) Int. Cl.: B60K 11/08, B60K 13/02

(54) **CLOISON ANTI-RECYCLAGE D'UN VEHICULE AUTOMOBILE.**
ANTI-RECYCLING-TRENNWAND EINES KRAFTFAHRZEUGS
ANTI-RECYCLING PARTITION OF A MOTOR VEHICLE.

(30) Priorité: 27.07.2011 FR 1156847
(43) Date de publication de la demande: 04.06.2014
(73) Titulaire: Peugeot Citroën Automobiles SA, 78140 Vélizy Villacoublay (FR)
(72) Inventeur: PEREZ, Gabriel, F-91190 Gif Sur Yvette (FR); REGHEM, Peter, F-92310 Sevres (FR)
(86) Numéro de dépôt international: PCT/FR2012/051363
(87) Numéro de publication internationale: WO 2013/014347

(56) Documents cités:
- FR-A1- 2 804 638
- GB-A- 2 319 758
- JP-A- 8 114 120
- JP-A- 2007 314 008

## Description

La présente invention concerne une cloison anti-recyclage pour un compartiment moteur d'un véhicule automobile, ainsi qu'un véhicule automobile disposant d'une telle cloison.

Les véhicules automobiles comportent généralement une façade avant se trouvant en avant du compartiment recevant le groupe motopropulseur, qui supporte différents éléments comme les phares disposés sur les côtés, et des radiateurs de refroidissement disposés entre les phares.

Les radiateurs peuvent servir à refroidir différents fluides comme le liquide de refroidissement ou l'huile du moteur thermique, le fluide de la climatisation, ou l'air d'admission du moteur thermique.

Un volume avant se trouve entre la façade équipée de ses radiateurs, et le bouclier formant le pare-choc avant du véhicule. Ce volume avant reçoit lors de la marche du véhicule l'air frais venant d'une ouverture pratiquée à l'avant de ce véhicule, au dessus ou en dessous du bouclier.

Les radiateurs reçoivent généralement sur leur face avant ou arrière, des ventilateurs permettant de forcer le passage d'air du volume avant vers le compartiment moteur, qui traverse ces radiateurs afin d'améliorer le refroidissement à l'arrêt du véhicule, ou lorsque sa vitesse est insuffisante pour générer un débit d'air assez important.

Dans le volume avant on installe généralement de manière connue, comme présenté notamment par le document FR-B1-2904950, de chaque côté de la façade une cloison anti-recyclage disposée perpendiculairement à cette façade, formant des plans encadrant les radiateurs pour délimiter sur ces côtés le compartiment moteur du volume avant.

Les cloisons anti-recyclage sont fixées aux extrémités de la façade, et suivent le contour des éléments se trouvant vers l'avant, en particulier le profil interne du bouclier, pour assurer une certaine étanchéité entre les deux volumes séparés.

De cette manière, lorsque les ventilateurs sont en fonctionnement et génèrent une surpression dans le compartiment moteur ainsi qu'une dépression dans le volume avant, cela évite un recyclage de l'air chaud sortant des radiateurs, qui pourrait revenir dans le volume avant et retourner à nouveau dans ces radiateurs. On améliore ainsi le refroidissement des radiateurs.

Sur certains véhicules, la façade supporte de manière connue dans le compartiment avant une entrée d'air pour le moteur thermique, qui est tournée vers une des cloisons anti-recyclage, et dont l'ouverture s'ajuste sur un passage d'air de cette cloison.

Un problème qui se pose alors, est que le passage de l'air peut être freiné par l'ajustement entre l'entrée d'air et la cloison qui peut être imparfait, et les performances du moteur peuvent être réduites.

La présente invention a notamment pour but de résoudre ces problèmes de l'art antérieur, et de proposer une solution simple et efficace, permettant de faciliter l'entrée d'air à partir d'une cloison anti-recyclage.

Elle propose à cet effet une cloison anti-recyclage disposée sur un côté d'une façade d'un véhicule automobile, cette cloison séparant le compartiment moteur du volume se trouvant en avant de radiateurs supportés par cette façade, caractérisée en ce qu'elle comporte d'une même pièce un conduit d'air disposé sensiblement transversalement, qui est dirigé vers l'intérieur du volume avant du véhicule, et qui se raccorde avec le plan de séparation formé par cette cloison.

Un avantage de la cloison anti-recyclage selon l'invention, est qu'en réalisant d'une même pièce le plan de séparation et le conduit d'air, les raccordements entre ces deux parties restent toujours bien ajustés.

La cloison anti-recyclage selon l'invention peut comporter de plus une ou plusieurs des caractéristiques suivantes, qui peuvent être combinées entre elles.

Avantageusement, le raccordement du conduit avec le plan de séparation, se fait de manière continue sur tout le pourtour de ce conduit.

Avantageusement, le raccordement entre le conduit et le plan de séparation, comporte des formes aérodynamiques facilitant l'écoulement de l'air.

Les formes aérodynamiques de raccordement, peuvent comporter un cône s'ouvrant vers le plan de séparation pour augmenter progressivement la section du passage d'air.

Selon un mode de réalisation, le conduit d'air se termine transversalement vers l'intérieur, par un support qui s'ajuste sur la façade.

Avantageusement, la cloison anti-recyclage est positionnée par un centreur réalisé sur le plan de séparation, qui vient s'ajuster dans un perçage de la façade.

En particulier, la cloison anti-recyclage peut être fixée sur la façade par des moyens de clipsage.

Avantageusement, la cloison anti-recyclage est réalisée par un moulage d'une matière plastique.

L'invention a aussi pour objet un véhicule automobile disposant d'une façade avant, recevant de chaque côté des cloisons anti-recyclage comportant l'une quelconque des caractéristiques précédentes.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue d'une façade avant comprenant une entrée d'air seule ;
- la figure 2 est une vue de cette façade avant comprenant l'entrée d'air et une cloison anti-recyclage selon l'art antérieur ; et
- la figure 3 est une vue de l'extrémité d'une façade, comprenant une cloison anti-recyclage équipée d'une entrée d'air selon l'invention.

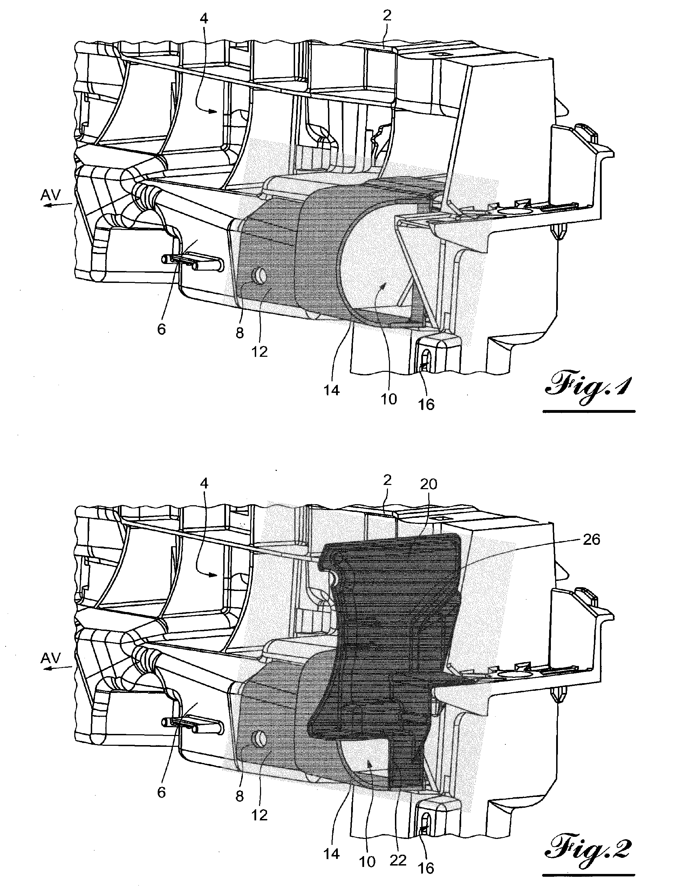

Les figures 1 et 2 présentent une façade 2 comportant du côté avant indiqué par une flèche marquée AV, des entrées d'air 4 qui laissent passer l'air venant du volume avant, vers le compartiment moteur situé en arrière de cette façade.

La façade 2 comporte une traverse 6, prévue pour supporter des radiateurs de refroidissement de fluides non représentés.

L'extrémité latérale de la traverse 6, reçoit une entrée d'air 10 comprenant un support 12 disposant d'un contour ajusté et fixé sur cette traverse.

Le support 12 comporte un perçage 8, qui reçoit un rivet de fixation de l'entrée d'air 10 sur la traverse 6 de la façade 2.

L'entrée d'air 10 se termine latéralement vers l'extérieur par un conduit 14 formant une canalisation orientée transversalement, dont le rebord extérieur vient au contact d'une cloison anti-recyclage 20.

La cloison anti-recyclage 20 fixée sur la façade 2, comporte des nervures 26 assurant sa rigidité. La partie basse 22 de la cloison anti-recyclage 20 se trouvant en face du conduit 14 de l'entrée d'air 10, comporte des formes tournées latéralement vers l'extérieur qui limitent considérablement le flux d'air venant du compartiment moteur.

L'entrée d'air 10 ainsi que la cloison anti-recyclage 20, sont réalisées avantageusement par des moulages de matières plastiques.

La traverse 2 comporte un perçage 16 formant une ouverture tournée vers l'avant, qui se trouve sous la cloison anti-recyclage 20.

Un problème qui se pose est que le conduit 14 de l'entrée d'air 10 ainsi que la cloison 20, forment deux pièces distinctes dont le raccordement n'est pas lisse et continu, le passage de l'air est perturbé. De plus avec les dispersions de moulage et d'assemblage des pièces réalisées en grande série, les raccordements entre ces pièces ne sont pas très précis.

Un autre problème est que dans le volume avant du véhicule, le raccordement entre le conduit 14 de l'entrée d'air 10 et la cloison anti-recyclage 20 n'étant pas parfait, il y a un risque lors de forte pluie ou de passage de gués par exemple, d'absorber de l'eau par ce raccordement, qui pénétrerait ensuite dans l'entrée d'air.

Par ailleurs il faut aussi gérer la fabrication de deux composants différents, et approvisionner en bord de ligne d'assemblage du véhicule ces deux pièces en tenant compte des diversités de composants suivant le type de véhicule à assembler, ce qui occasionne des risques d'erreurs et des coûts.

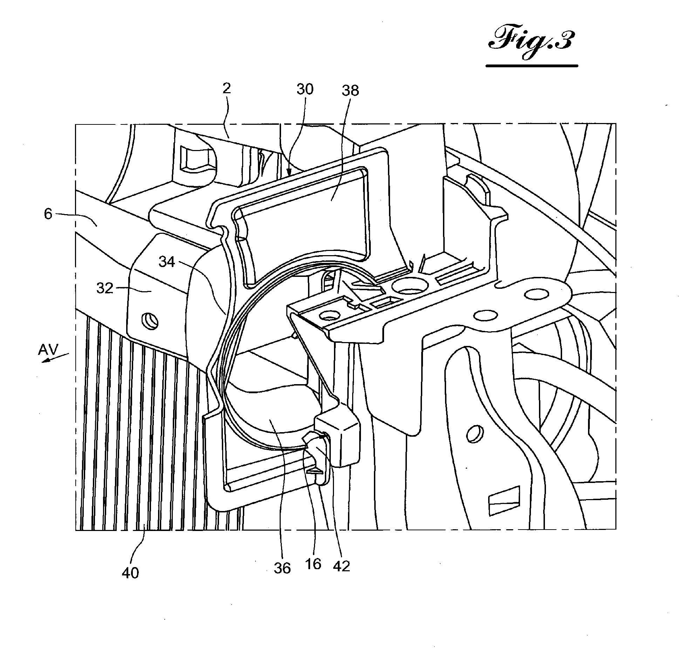

La figure 3 présente une façade avant 2 recevant un radiateur 40 disposé en dessous de sa traverse 6.

Une cloison anti-recyclage 30 moulée en une seule pièce dans une matière plastique, comporte une entrée d'air comprenant un support 32 similaire à celui présenté figure 1, disposant d'un contour qui est ajusté sur la traverse 6.

Le support 32 se prolonge latéralement vers l'extérieur par un conduit 34 formant une canalisation orientée transversalement, dont le rebord extérieur comprend une pente formant un cône 36 s'ouvrant vers le côté du véhicule pour augmenter progressivement la section du passage d'air.

L'extrémité extérieure du cône 36 se raccorde de manière continue sur le plan de séparation 38 de la cloison anti-recyclage 30.

On obtient ainsi un passage d'air comprenant un raccordement entre le conduit 34 et le plan 38 toujours bien ajusté, comportant des formes aérodynamiques facilitant l'écoulement de l'air, qui peuvent être facilement réalisées par moulage d'une matière plastique.

De plus le raccordement entre le conduit 34 et le plan de séparation 38 étant continu sur le pourtour de ce conduit, il n'y a plus de risque d'infiltration dans ce conduit d'eau venant du volume avant du véhicule.

Par ailleurs la production d'un seul composant, la cloison anti-recyclage 30 comportant le conduit 34, est plus économique que la production de deux composants séparés. Il faut stocker et approvisionner sur le bord de la ligne un seul composant, ce qui facilite la gestion, diminue les risques d'erreurs et réduit les coûts.

Avantageusement, la cloison anti-recyclage 30 comporte des clips venus de moulage qui viennent se clipser sur la façade avant 2 du véhicule, ce qui permet d'éviter d'utiliser des rivets de fixation.

On notera que la fixation d'un seul composant sur le véhicule, est plus simple et plus rapide que la fixation de deux composants séparés, et nécessite moins de moyens de fixation.

En particulier, la cloison anti-recyclage 30 peut se monter sur la façade avant 2 en positionnant le plan de séparation 38 sur cette façade, par un centreur 42 moulé sur ce plan de séparation, qui vient s'ajuster dans le perçage 16 de la façade.

Par ailleurs, le support 12 comporte avantageusement un clip de fixation réalisé par moulage, qui vient se clipser dans le perçage de la traverse 6 prévu pour recevoir initialement le rivet de fixation de l'entrée d'air 10.

## Revendications

1. Cloison anti-recyclage disposée sur un côté d'une façade (2) d'un véhicule automobile, cette cloison séparant le compartiment moteur du volume se trouvant en avant de radiateurs (40) supportés par cette façade, **caractérisée en ce qu'**elle comporte d'une même pièce un conduit d'air (34) disposé sensiblement transversalement, qui est dirigé vers l'intérieur du volume avant du véhicule, et qui se raccorde avec le plan de séparation (38) formé par cette cloison.

2. Cloison anti-recyclage selon la revendication 1, **caractérisée en ce que** le raccordement du conduit (34) avec le plan de séparation (38), se fait de manière continue sur tout le pourtour de ce conduit.

3. Cloison anti-recyclage selon la revendication 1 ou 2, **caractérisée en ce que** le raccordement entre le conduit (34) et le plan de séparation (38) comporte des formes aérodynamiques facilitant l'écoulement de l'air.

4. Cloison anti-recyclage selon la revendication 3, **caractérisée en ce que** les formes aérodynamiques de raccordement, comportent un cône (36) s'ouvrant vers le plan de séparation (38) pour augmenter progressivement la section du passage d'air.

5. Cloison anti-recyclage selon l'une quelconque des revendications précédentes, **caractérisée en ce que** le conduit d'air (34) se termine transversalement vers l'intérieur, par un support (32) qui s'ajuste sur la façade (6).

6. Cloison anti-recyclage selon la revendication 5, **caractérisée en ce qu'**elle est positionnée par un centreur (42) réalisé sur le plan de séparation (38), qui vient s'ajuster dans un perçage (16) de la façade.

7. Cloison anti-recyclage selon l'une quelconque des revendications précédentes, **caractérisée en ce qu'**elle est fixée sur la façade (2) par des moyens de clipsage.

8. Cloison anti-recyclage selon l'une quelconque des revendications précédentes, **caractérisée en ce qu'**elle est réalisée par un moulage d'une matière plastique.

9. Véhicule automobile disposant d'une façade avant (2) recevant de chaque côté des cloisons anti-recyclage (30), **caractérisé en ce que** ces cloisons anti-recyclage sont réalisées suivant l'une quelconque des revendications précédentes.

## Patentansprüche

1. Anti-Recycling-Trennwand, die auf einer Seite einer Fassade (2) eines Kraftfahrzeugs angeordnet ist, wobei diese Wand den Motorraum von dem Raum trennt, der sich vor Kühlern (40), die von dieser Fassade getragen werden, befindet, **dadurch gekennzeichnet, dass** sie aus einem Stück eine Luftleitung (34), die im Wesentlichen quer angeordnet ist, die zu dem Inneren des Vorderraums des Fahrzeugs gerichtet ist und die an die Trennebene (38), die von dieser Wand gebildet wird, anschließt, umfasst.

2. Anti-Recycling-Trennwand nach Anspruch 1, **dadurch gekennzeichnet, dass** der Anschluss der Leitung (34) mit der Trennebene (38) durchgehend auf dem gesamten Umfang dieser Leitung erfolgt.

3. Anti-Recycling-Trennwand nach Anspruch 1 oder 2, **dadurch gekennzeichnet, dass** der Anschluss zwischen der Leitung (34) und der Trennebene (38) aerodynamische Formen umfasst, die das Strömen der Luft erleichtern.

4. Anti-Recycling-Trennwand nach Anspruch 3, **dadurch gekennzeichnet, dass** die drei aerodynamischen Anschlussformen einen Kegel (36) umfassen, der sich zu der Trennebene (38) öffnet, um allmählich den Querschnitt des Luftdurchgangs zu vergrößern.

5. Anti-Recycling-Trennwand nach einem der vorhergehenden Ansprüche, **dadurch gekennzeichnet, dass** die Luftleitung (34) quer zu dem Inneren durch einen Träger (32), der sich auf der Fassade (6) anpasst, endet.

6. Anti-Recycling-Trennwand nach Anspruch 5, **dadurch gekennzeichnet, dass** sie durch einen Zentrierer (42) positioniert ist, der auf der Trennebene (38) hergestellt ist, der sich in eine Bohrung (16) der Fassade passt.

7. Anti-Recycling-Trennwand nach einem der vorhergehenden Ansprüche, **dadurch gekennzeichnet, dass** sie auf der Fassade (2) durch Clipsmittel befestigt ist.

8. Anti-Recycling-Trennwand nach einem der vorhergehenden Ansprüche, **dadurch gekennzeichnet, dass** sie durch ein Formen eines Kunststoffs hergestellt ist.

9. Kraftfahrzeug, das über eine Vorderfassade (2) verfügt, die auf jeder Seite Anti-Recycling-Trennwände (30) erhält, **dadurch gekennzeichnet, dass** die Anti-Recycling-Trennwände nach einem der vorhergehenden Ansprüche hergestellt sind.

## Claims

1. An anti-recycling partition arranged on one side of a front surface (2) of a motor vehicle, said partition separating the engine compartment from the volume located in front of radiators (40) supported by this front surface, **characterized in that** it comprises an air duct (34) formed of a same part arranged substantially transversely, which is directed inside the front volume of the vehicle, and which connects with the separating plane (38) formed by this partition.

2. The anti-recycling partition according to Claim 1, **characterized in that** the connection of the duct (34) with the separating plane (38) is carried out continuously over the entire circumference of this duct.

3. The anti-recycling partition according to Claim 1 or 2, **characterized in that** the connection between the duct (34) and the separating plane (38) comprises aerodynamic shapes facilitating the flow of the air.

4. The anti-recycling partition according to Claim 3, **characterized in that** the aerodynamic connection shapes comprise a cone (36) opening towards the separating plane (38) to progressively increase the section of the air passage.

5. The anti-recycling partition according to any one of the preceding claims, **characterized in that** the air duct (34) terminates transversely towards the interior, by a support (32) which accommodates itself on the front surface (6).

6. The anti-recycling partition according to Claim 5, **characterized in that** it is positioned by a centring device (42) produced on the separating plane (38), which comes to accommodate itself in a bore (16) of the front surface.

7. The anti-recycling partition according to any one of the preceding claims, **characterized in that** it is fixed on the front surface (2) by clipping means.

8. The anti-recycling partition according to any one of the preceding claims, **characterized in that** it is produced by a moulding of a plastic material.

9. A motor vehicle having a front surface (2) receiving on each side anti-recycling partitions (30), **characterized in that** these anti-recycling partitions are produced according to any one of the preceding claims.
